# EUROPEAN PATENT APPLICATION

(11) **EP 1 281 618 A1**
(43) Date of publication of application: **05.02.2003**
(21) Application number: 02078102.7
(22) Date of filing: 31.07.2002
(51) Int. Cl.: B65B 25/04, B65B 35/24, B65G 21/14

(54) **Orientation mechanism with displacement capability for a citrus fruits packaging system**

(30) Priority: 31.07.2001 TR 200102198
(71) Applicant: Tarend Tarim Endustri Mak. IML. SAN. VE TIC.LTD.STI, 35477 Kisikkoy, Izmir (TR)
(72) Inventor: Hasanoglu, Nazmi, 35477 Kisikkoy, Izmir (TK)
(74) Representative: Gürsoy, Mehmet Bahadir

(57) **Abstract**

A citrus fruit packaging mechanism comprising a conveyor band (15) holding citrus fruits for orienting or directing thereof into a reservoir in order to be packaged wherein plurality of moving average drums (2, 3) attached to the conveyor band (15) are provided and the moving average drums (2, 3) are capable of moving forward-backward directions for allowing a cavity (20) on the conveyor band (15) for orienting the citrus fruits into the reservoir.

## Description

### TECHNICAL FIELD

The present invention relates to an orientation apparatus operated before a product is packaged in a citrus fruits packaging system; and more particularly relates to a telescopic conveyor mechanism that is capable to displace on a horizontal plane within said orientation apparatus and to homogeneously arrange products to be packaged in a reservoir.

### BACKGROUND OF THE ART

As is known, citrus fruits are a sort of foodstuff that are sensitive towards external effects and show a high tendency towards rotting. Their rotting times are especially accelerated as a result of damages occurring on the outer peel of said fruits.

Known mechanisms within current citrus fruits packaging systems consist of damper units wherein citrus fruits' cases are discharged; a presorting unit where rotten or unutilized fruits are sorted; a brushing/washing unit wherefrom fruits are passed through to be purified from parasites and fungi; a drying unit wherein on-surface water residues are removed; a waxing unit wherein said fruit surfaces are coated against possible parasites to survive thereon; a classification unit wherein products are sorted according to their sizes; distribution bands whereon fruits are passed before sent to reservoirs; and finally the reservoirs, wherein products/citrus fruits to be packaged are positioned.

Regarding known embodiments, constant peeling means are positioned in one-meter intervals on the upper side of bands in order to orient said products to be delivered to said reservoirs after they are passed from the above specified units.

Another orientation means are constant bars, which are located on the upper side of the same bands.

The present orientation means are such a mechanism that are suggested for dropping citrus fruits into said reservoirs, whereas they relatively fulfil this objective. The most significant drawback, however, in these orientation means of present embodiments is that since said fruits are caught between the conveyor band and orientation means as they are directed towards said reservoirs, they are bruised and are thus rotted in a relatively shorter time. As a result, though present embodiments have functionally advantages, they bear disadvantages in that they fail to supply said products free of problems, which is supposed to be the main objective of a packaging system.

### DESCRIPTION OF INVENTION

The objective of the present invention is to minimize the wasted product ratio in citrus fruits packaging systems.

Another objective of the present invention is to enhance the functionality of the citrus fruits packaging process.

The orientation mechanism under the present invention that constitutes the final unit wherefrom products are transferred to the reservoir unit in a citrus fruit packaging system consists of main components such as average drums making a horizontal movement in parallel to conveyor bands and connection means of a constant length such as chains, cables, or belts.

Products coming from the fruit conveying band fall into reservoirs immediately after they pass the moving average drums. This is because the direction opposite to the fruit flow direction of the moving average drum is blanked; thus said fruits that pass from the moving average drum fall freely into said reservoir by being subjected to a free fall. The movement of the moving average drums are provided by means of a telescopic movement.

The conveyor band of the apparatus realized under the present invention consists of a driver drum, forward-backward moving average drums, and constant average drums. The displacement amount of average drums performing said forward-backward movement are controlled by means of switches. When the forward-backward moving drum contacts to the switch, the telescopic movement drum driving the moving drums start to rotate in the opposite direction; and for instance, the moving average drums that rotate "forwards" before the switch is contacted, start to rotate "backward" when this switch is contacted.

Thanks to this continuos forward-backward motion of the moving average drums, citrus fruits coming from the conveyor band are located into a reservoir homogeneously.

### DESCRIPTION OF FIGURES

The present invention should be evaluated along with the below described figures in order to best understand the relevant embodiment and the advantages with accompanying elements.

Figure 1 gives a perspective view of the apparatus performed under the present invention.

Figure 2 gives a side view of the apparatus performed under the present invention.

### REFERENCE NUMBERS OF THE PARTS IN FIGURES.

- 1-: Driver drum
- 2-: Top moving average drums
- 3-: Bottom moving average drums
- 4-: Movement drum
- 5-: Top-interior constant average drum
- 6-: Bottom-interior constant average drum
- 7-: Middle-top constant average drum
- 8-: Middle-bottom constant average drum
- 9-: Exterior-top constant average drum
- 10-: Exterior-bottom constant average drum
- 11-: Upper roller group
- 12-: Lower roller group
- 13-: Lower moving carriage
- 14-: Upper moving carriage
- 15-: Band
- 16-: Central wire-cable
- 17-: Lower wire-cable
- 18-: Wire-Cable
- 19-: Displacement stroke

### DETAILED EXPLANATION OF INVENTION

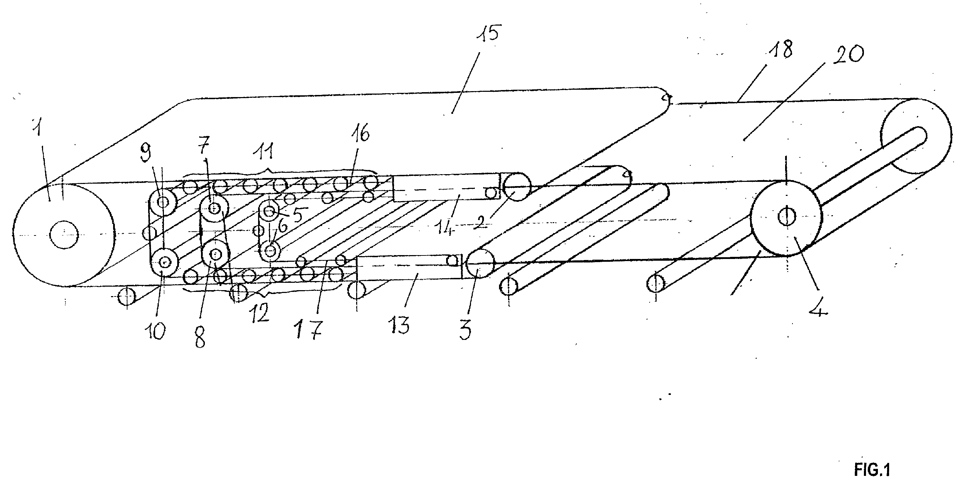

Figure 1 gives a perspective view of the moving citrus fruits orienting mechanism embodied under the present invention. Accordingly, the conveyor band (15) is rotated by a driver drum (1). The band (15) that passes by the driver drum (15) in the movement direction arrives at the middle-top constant average drum (7) after it is passed through the top moving average drum (2). Thereafter, it is sent in a perpendicular direction to the middle-bottom constant average drum (8). It is then passed to the bottom moving average drum (3) and delivered to the driver drum again.

There are lower and upper moving carriages (13, 14) present, moving together with this average drum right beside the moving average drums (2, 3). These upper and lower carriages are connected to each other by means of wire-cables (16, 17). These cables are located between the forward and backward direction of the conveyor band (15) and have a constant length. One end of the central wire-cable (16) among these cables is connected to the upper moving carriage (14) and the other end is connected to the lower moving carriage (13). After the central wire-cable (16) coming from the upper moving carriage is passed though an exterior-top constant average drum (16), it arrives at an exterior-bottom constant average drum (10) and then at the lower moving carriage (13).

Similarly, the lower cable (17) is connected from one end to the upper moving carriage (14) and from the other end to the lower moving carriage (13), whereas the lower cable (17) coming from the upper moving carriage (14) arrives at the bottom-interior constant average drum (6) and then at the lower moving carriage (13) after it is passed from the top-interior constant average drum (5).

Also, an upper roller group (11) under the band (15) in the forward direction of the band (15) movement and a lower roller group (12) in the backward direction of the band (15) movement are positioned in order to support citrus fruits on the band (15).

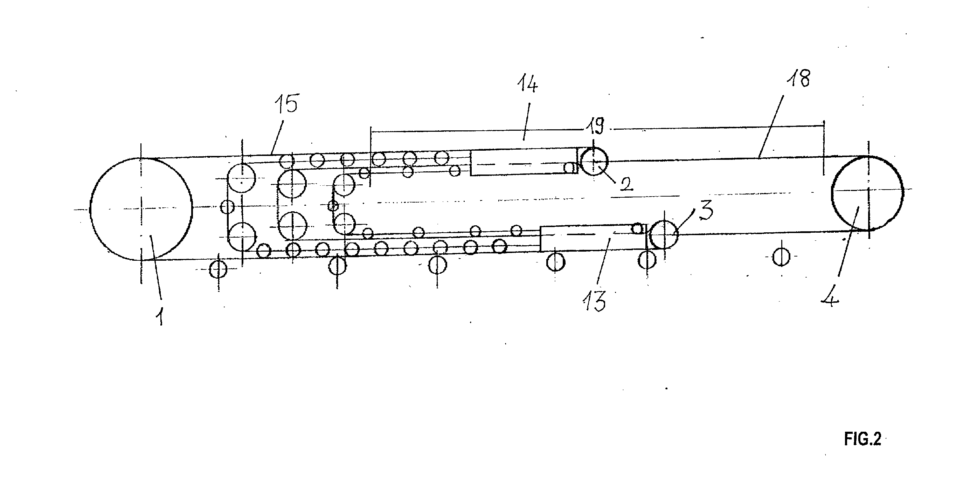

The components most peculiar under the present invention are the upper and lower moving average drums (2, 3). As it can be seen from Figures 1 and 2 there are not any obstacles for said fruits conveyed on the band in the forward direction. Said fruits passing the upper moving average drum (2) come to a cavity (20) and are sent into a reservoir by being subjected to free fall. Absorption elements have been realized under the free fall site in order to decrease the intensity of fall. These moving average drums (2, 3) can make horizontal displacements in parallel to the conveyor band (15). The moving drum (4) whereto said upper and lower moving average drums (2, 3) are connected by means of a cable (18) provide this displacement.

Said moving drum can rotate clockwise and counterclockwise. The rotation direction and thus the horizontal forward-backward movement of the moving average drums (2, 3) is changed when the upper moving average drum (2) contacts to the switch elements positioned on the boundaries of the displacement stroke (19).

The moving average drums (2, 3) make continuous movements in order to place citrus fruits into the reservoir and as indicated above, this motion is performed on the left-right (or forward-backward) direction and the direction of movement is changed by altering the rotation direction of the movement drum (4) driving these moving average drums (2, 3).

## Claims

1. A citrus fruit packaging mechanism comprising a conveyor band (15) holding citrus fruits for orienting or directing thereof into a reservoir in order to be packaged **characterized in that** plurality of moving average drums (2, 3) attached to the conveyor band (15) are provided and **in that** the moving average drums (2, 3) are capable of moving forward-backward directions for allowing a cavity (20) on the conveyor band (15) for orienting the citrus fruits into the reservoir.

2. A citrus fruits orientation mechanism according to claim 1, **characterized in that** said moving average drums (2, 3) comprise at least one top moving average drum (2) in the forward direction of said conveyor band (15) and at least one bottom moving average drum (3) in the backward direction of said conveyor band (15).

3. A citrus fruits orientation mechanism according to claim 1, **characterized in that** at least one movement drum (4) drives said movement average drums (2, 3).

4. A citrus fruits orientation mechanism according to anyone of the preceding claims, **characterized in that** connection means (18) preferably chains or cables of a constant length, connect said moving average drums (2, 3) to each other.

5. A citrus fruits orientation mechanism according to anyone of the preceding claims, **characterized in that** at least one upper moving carriage (14) and at least one lower moving carriage (13) are positioned beside said moving average drums (2, 3).

6. A citrus fruits orientation mechanism according to anyone of the preceding claims, **characterized in that** said conveyor band (15) arrives at said top moving average drum (2) after it passes said driver drum (1) and then it reaches to the middle-top constant average drum (7), then to the middle-top constant average drum (8), then to said bottom moving average drum (3), and then again to said driver drum (1).

7. A citrus fruits orientation mechanism according to anyone of the preceding claims, **characterized in that** one end of a lower wire-cable (17) of a constant length is connected to said upper moving carriage (14), and the other end is connected to said lower moving carriage (13) after it passes by the top-interior constant average drum (5) and then by the bottom-interior constant average drum (6).

8. A citrus fruits orientation mechanism according to anyone of the preceding claims, **characterized in that** one end of a central wire-cable (16) of a constant length is connected to said upper moving carriage (14), and the other end is connected to said lower moving carriage (13) after it passes by the exterior-top constant average drum (9) and then by the exterior-bottom constant average drum (10).

9. A citrus fruits orientation mechanism according to anyone of the preceding claims, **characterized in that** at least two switches controlling the displacement stroke (19) of said moving average drums (2, 3) within predetermined values are provided and **in that** said upper moving carriages (14) are in contact with said switches.

10. A citrus fruits orientation mechanism according to anyone of the preceding claims, **characterized in that** when said upper moving carriage (14) contacts to one of said switches, said movement drum (4) starts to change its direction of rotation.

11. A citrus fruits orientation mechanism according to anyone of the preceding claims, **characterized in that** absorption means are provided in order to reduce the intensity of fall where citrus fruits fall down to a reservoir from said conveyor band (15).
